# EUROPÄISCHE PATENTSCHRIFT

(11) **EP 0 408 974 B1**
(45) Veröffentlichungstag und Bekanntmachung des Hinweises auf die Patenterteilung: **04.10.1995**
(21) Anmeldenummer: 90112649.0
(22) Anmeldetag: 03.07.1990
(51) Int. Cl.: H01S 3/30

(54) **Laservorrichtung mit Ramanzelle**
Laser device with Raman cell
Dispositif laser avec cellule Raman

(30) Priorität: 18.07.1989 DE 3923745
(43) Veröffentlichungstag der Anmeldung: 23.01.1991
(73) Patentinhaber: ELTRO GmbH Gesellschaft für Strahlungstechnik, D-69011 Heidelberg (DE)
(72) Erfinder: Prein, Franz, Dipl.-Phys., D-6903 Neckargemünd-Waldhilsbach (DE); Körner, Joachim, Dipl.-Ing., D-6836 Oftersheim (DE); Ruger, James, Dr., D-6921 Hoffenheim (DE)
(74) Vertreter: Frick, Gerhard, Dipl.-Ing.

(56) Entgegenhaltungen:
- EP-A- 0 081 081
- US-A- 4 751 714

## Beschreibung

Die Erfindung betrifft eine Laservorrichtung mit Ramanzelle nach dem Oberbegriff des Anspruchs 1.

Eine solche Laservorrichtung ist aus US 4,751,714 bekannt. Auch hier erfolgt eine Dissoziation von CH₄ und anschließende Regenerierung mittels Wasserstoff. Dies allein reicht jedoch für höhere Ansprüche nicht aus, weil nämlich die Umwandlungsraten der Dissoziationsprodukte CH₃, CH₂ oder C mit Wasserstoff viel zu gering ausfallen. Eine ähnliche Vorrichtung mit einer Methan-Raman-Zelle für gepulsten Betrieb ist auch der DE 31 14 815 C2 zu entnehmen.

Aus DE 31 48 570 C2 ist sodann noch die katalytische Regenerierung von CO₂-Gas bekannt, jedoch ist diesem Dokument kein Hinweis auf eine Katalyse in einer Ramanzelle zu entnehmen, die u.A. neue Materialien und/oder die Optimierung von Material-Kombinationen erforderlich macht.

Arbeitsgebiet der Erfindung ist die Wellenlängenverschiebung von Laserstrahlung mit hohem Wirkungsgrad und hohen Pulsfolgefrequenzen bei guter Stabilität von Mode und Divergenz. Insbesondere geht es um die Verschiebung der Strahlung eines Nd-YAG-Lasers von der Wellenlänge 1,06µ in den augenunschädlichen Bereich um 1,54 µ bei einem angestrebten Wirkungsgrad von ca. 30 % und mehr. Hierfür werden Ramanzellen mit hohen Moleküldichten bzw. einem hohen Druck des gasförmigen ramanaktiven Mediums eingesetzt. Bei der Methan-Raman-Zelle beispielsweise ist für hohe Leistungen ein Druck von ca. 100 Bar erforderlich. Die Leistungsdichte des Pumplasers ist bei geringer Strahldivergenz und guter Modenreinheit hoch. Das ramanaktive Gas unterliegt daher einer hohen Belastung. Es kommt im Laserfokus zu einer starken Aufheizung und Zerstörung von Gasanteilen durch Dissoziation und Ionisation, was ab einem bestimmten Schwellwert der Energie pro Gasvolumen zu einem Gasdurchbruch bzw. einer Plasmabildung führt. Bei Methan (CH₄) als ramanaktivem Medium werden als dessen Bruchstücke CH₃, CH₂, CH, C, H und H₂ sowie deren Ionen und Verbindungen gebildet. Aus den Bruchstücken können sich wieder andere störende Verbindungen bilden, insbesondere weil die Bruchstücke als Radikale, z.B. CH₃⁻ usw., besonders aktiv sind. So entstehen z.B. aus CH₂-Gruppen bevorzugt Vernetzungen, die schließlich zu Polyäthylen werden. Bei längeren Betriebszeiten und/oder hohen Pulsfolgefrequenzen und Pulsenergien und/oder starker Bündelung der Strahlung im Fokus entstehen Abscheidungen aus reinem Kohlenstoff. Durch die Wechselwirkung mit der hohen elektrischen Feldstärke im Laserfokus können sich dort Bruchstücke und Verbindungen sammeln und den Schwellwert für die Gaszerstörung durch den nächsten Laserpuls herabsetzen. Weiter können sich Verbindungen auf den inneren Oberflächen der Ramanzelle niederschlagen, was sich besonders auf den Ein- und Austrittsfenstern störend auswirkt, da es hier zu einer Wechselwirkung mit der Strahlung kommt, insbesondere einer erhöhten Strahlungsabsorbtion, die zu einer Aufheizung und Zerstörung der optischen Schichten führt. Das begrenzt die Leistung und Lebensdauer einer solchen Ramanzelle.

Erschwerte Verhältnisse herrschen bei dauerhaft in sich abgeschlossenen (sealed-off) Ramanzellen, bei denen eine Öffnung gleichbedeutend mit ihrer Zerstörung wäre. Derartige Ramanzellen sind bei hohen Anforderungen an einen kompakten Aufbau und störungsfreien Betrieb insbesondere unter extremen Temperaturbedingungen bevorzugt. Im Sealed-off-Betrieb können leichtausgasende Stoffe, Kleberreste usw. zu Verunreinigungen des ramanaktiven Mediums und der inneren Oberfläche der Ramanzelle führen und empfindliche Störungen des Betriebs zur Folge haben, ohne daß ein Gasaustausch oder eine Erneuerung optischer Komponenten möglich wäre.

Um ein Zahlenbeispiel zu nennen, waren die Fenster einer Ramanzelle nach 5000 Laserschüssen bei 50 mJ Laserenergie, einer Divergenz von ca. 3 mrad und einer Brennweite der Fokussierungslinse von f = 50 mm bereits teilweise zerstört.

Aufgabe der Erfindung ist es, eine Laservorrichtung mit Ramanzelle der genannten Art anzugeben, die sich bei kompaktem Aufbau der insbesondere dauerhaft abgeschlossenen (sealed-off) Ramanzelle durch einen hohen Wirkungsgrad und eine entsprechend hohe Energie der Leistung und Pulse, eine gute Stabilität von Mode und Divergenz und geringe Schwankungen der Energie und Leistung von Puls zu Puls auszeichnet, auch bei extremen Temperaturen von z.B. -50°C bis +80 °C einen Betrieb mit hohen Laserpulsfolgefrequenzen, z.B. 25 sec⁻¹ und mehr, ermöglicht, und ohne Austausch oder Erneuerung des ramanaktiven Mediums oder anderer, insbesondere optischer Komponenten mehrere Jahre lagerfähig ist und eine hohe Betriebslebensdauer von insbesondere mehreren Millionen Laserpulsen hat. Es soll verhindert werden, daß Veränderungen des ramanaktiven Mediums, z.B. Dissoziationen, Ionisationen und chemische sowie physikalische Umsetzungen eintreten und zu irreversiblen Änderungen der Funktion führen.

Diese Aufgabe wird bei einer Laservorrichtung mit Ramanzelle gemäß Anspruch 1 gelöst. Weitere Ausgestaltungen der Erfindung gehen aus den Unteransprüchen hervor.

Um weitere Wirkungsgradsteigerungen und eine höhere Pulsfolgefrequenz bei guter Stabilität von Mode und Divergenz zu erzielen, wird gemäß der Erfindung mit einer adsorbierend und katalytisch wirkenden Substanz direkt in die Gaschemie und Gasphysik des ramanaktiven Mediums eingegriffen. Das ist besonders bei extremen Temperaturen und hohen Anforderungen an die Gleichmäßigkeit der Leistung bzw. Energie von Puls zu Puls sowie an eine hohe Betriebslebensdauer erforderlich. Als extreme Temperaturen sind die Bereiche um -50 °C bzw. +50 °C bis +80 °C zu verstehen. Die Gleichmäßigkeit der Energie von Puls zu Puls, typisch etwa ± 10 - 20%, kann auf wenige Prozent verbessert werden, während die Betriebslebensdauer bei abgeschlossenem Gasraum mehr als verdoppelt, unter extremen Temperaturbedingungen, bei kleiner kompakter Bauweise und unter Verwendung kostengünstiger Materialien sogar bis zu verzehnfacht werden kann.

Die adsorbierende Wirkung der erfindungsgemäß vorgesehenen Substanz zielt dahin, durch Lasereinstrahlung entstandene Bruchstücke des ramanaktiven Mediums, daraus gebildete Verbindungen und sonstige Verunreinigungen zu binden und aus dem ramanaktiven Medium zu eliminieren. Durch die katalytische Wirkung der Substanz wird die Rekombination von Bruchstücken des ramanaktiven Mediums gefördert. Es sei angemerkt, daß mit der katalytischen Wirkung insbesondere eines Festkörperkatalysators in aller Regel auch eine adsorbierende Wirkung einhergeht. Auf diese Weise lassen sich durch Ionisation, Dissoziation oder andere chemische Prozesse zerstörte bzw. veränderte Moleküle ohne einen Eingriff von außen, insbesondere ohne Öffnen der Ramanzelle, wieder aufbereiten, so daß ein stabiler Betrieb möglich und die Lebensdauer der Vorrichtung erhöht wird.

Der Erfindung sieht eine heterogene Katalyse vor, bei der sich die adsorbierend und katalytisch wirkende Substanz in einem von dem Phasenzustand des ramanaktiven Mediums verschiedenen Phasenzustand befindet. Insbesondere kann sich das ramanaktive Medium in einem fluiden, vorzugsweise gasförmigen Zustand befinden und in Kontakt mit einem Festkörperkatalysator stehen. Letzterer wirkt zunächst als Adsorber, um in einem zweiten Schritt die adsorbierten Atome oder Moleküle umzuwandeln und die Umwandlungsprodukte wieder zu desorbieren. Die Adsorbtion als erster Schritt zum Wegführen bzw. zur Verminderung unerwünschter Gasbeimischungen ist grundsätzlich erforderlich, um eine anschließende Umwandlung einzuleiten. Bei hohen Forderungen bezüglich Lebensdauer und Stabilität der Gaszusammensetzung ist diese katalytische Umsetzung in hohem Maße wünschenswert.

Die Auswahl der Substanzen mit geeigneter Adsorbtion erfolgt durch experimentelle Untersuchungen von Materialien mit hinreichender Oberflächenaktivität und großer spezifischer Oberfläche. In der Reihe der bekannten und als Katalysatorträger verwendeten Substanzklassen wie z.B. Kohlenstoff (Aktivkohle), Zinndioxid (SnO₂),Aluminiumoxid (Al₂O₃) Siliziumdioxid (SiO₂) usw. oder Metallen wie z.B. Titan (Ti), Kupfer (Cu), Eisen (Fe), Mangan (Mn) usw. ergeben sich recht unterschiedliche molekülspezifische Eigenschaften. Je nach Struktur dieser Substanzen (z.B.α, γ, oder η bei Aluminiumoxid Al₂O₃), Beimischungen (z.B. Kohlenstoff C, Natrium Na, Eisen Fe, Silizium Si, Rubidium Rb, Kalium K, Zinn Sn), Porenvolumen und Porendimension und -verteilung können die Eigenschaften Adsorbtion, Absorbtion, Desorbtion, Diffusion, katalytische Aktivität und spezifische Oberfläche, Temperaturabhängigkeit und Abriebfestigkeit eingestellt werden.

Als eine besonders für Methan-Raman-Zellen günstige Ausführungsform ergab sich folgende Optimierung. Als Katalysatorträger wurde eine Aluminiumoxidkeramik mit η-Kristallstruktur verwendet. Ähnlich gute Ergebnisse ließen sich auch mit Mischstrukturen γ - η erzielen. Als Porenvolumen dieser Träger wird etwa 0,6 bis 0,9 ml/g gewählt. Das Optimum dieses Wertes hängt von der Rate der umzusetzenden Moleküle pro Zeiteinheit ab. Laserleistungsdichte, Pulsfolgefrequenz und Gasdichte (Druck) bestimmen diese Größe. Ebenso ist die Dimension der Poren in Abhängigkeit von diesen Parametern und der Auslegung der Umströmung (Gasumwälzung und/oder Gasverwirbelung) zu bestimmen. Auf diese Weise wird die Verweilzeit der Moleküle im Katalysatorbereich und damit Umwandlung, Aufwärmung und Desorption festgelegt.

Die katalytisch wirksame Substanz des Festkörperkatalysators gemäß Anspruch 1 enthält eine Mischung von den Edelmetallen Platin (Pt) und in wenigen Gewichtsprozenten Palladium (Pd). Überraschenderweise ist es gelungen, eine katalytische Wirksamkeit derartiger Edelmetallkatalysatoren auch bei den erwähnten niedrigen Betriebstemperaturen der Laservorrichtung sicherzustellen.

Gemäß Anspruch 1 ist in Kombination mit der heterogenen Katalyse auch eine homogene Katalyse vorgesehen, bei der sich die katalytisch wirkende Substanz in dem gleichen Phasenzustand wie das ramanaktive Medium befindet. Einem gasförmigen ramanaktiven Medium, insbesondere Wasserstoff, Deuterium, einem wasserstoffhaltigen Gas wie insbesondere Methan, oder einem Gemisch davon ist als homogener Katalysator vorzugsweise ein gasförmiges stabiles Zerlegungsprodukt des Mediums zugegeben, insbesondere Wasserstoff, Deuterium, ein wasserstoffhaltiges Gas niedrigeren Molekulargewichts, oder ein Gemisch davon. Ausgehend von einer Methan-Raman-Zelle, wird erfindungsgemäß vorgeschlagen, dem Methan Wasserstoff beizumischen, der, wie schon erwähnt, auch bei der thermochemischen Zerlegung des Methan im Laserfokus entsteht. Durch die Wasserstoffbeimischung wird das Gleichgewicht der Zerlegungsreaktion hin zu dem Ausgangsprodukt Methan verschoben, d.h dessen Rekombination gefördert.

Zugleich zum Festkörperkatalysator werden zur homogenen Katalyse geeignete Gase zugegeben. Ein hoher Anteil dieser Zumischungen adsorbiert dabei auf den Oberflächen des Festkörperkatalysators und steht dann sowohl an den Oberflächen als auch im Gasraum katalytisch wirksam zur Verfügung. Der heterogene Katalysator kann in einer Druck- und Temperaturbehandlung mit dem homogenen Katalysator wenigstens teilweise gesättigt sein.

Der Festkörperkatalysator kann ein die optische Achse umschließender, vorzugsweise zylindrischer Hohlkörper mit rundem oder eckigem Querschnitt sein. Der Fokus der Laserstrahlung liegt vorzugsweise im Innern des Katalysators, so daß der Weg zu dessen wirksamer Oberfläche kurz ist. Der Fokus der Laserstrahlung kann im Innern des Katalysators vom Eintrittsfenster der Ramanzelle weg zu deren Austrittsfenster versetzt sein. Zerlegungs- und Reaktionsprodukte des ramanaktiven Mediums werden so besonders wirkungsvoll von dem durch höhere Strahlungsintensitäten belasteten Eintrittsfenster ferngehalten.

Der Festkörperkatalysator kann ein in die Ramanzelle eingefügter separater Block sein. Es ist aber auch möglich, die Innenwände der Zelle wenigstens abschnittsweise als Katalysator auszubilden.

In einer bevorzugten Variante enthält die Ramanzelle eine Einrichtung zur Erzeugung einer Gasbewegung, insbesondere Gasverwirbelung und/oder Gastransportströmung, vorzugsweise einer Zirkulationsströmung. Man bewirkt dadurch einen Gasaustausch innerhalb der Zelle, durch den Dissoziations-, Ionisations- und chemische Reaktionsprodukte effektiv aus dem Laserfokus entfernt und an die Katalysatorflächen transportiert werden. Von Laserpuls zu Laserpuls sollte nach Möglichkeit ein vollständiger Austausch des sich im Laserfokus befindlichen Gases erfolgen. Zur Erzeugung der Gasbewegung sind Gebläserotoren oder Schwingflügelsysteme geeignet, die innerhalb einer abgeschlossenen Ramanzelle auf unaufwendige Weise mit magnetischer Kopplung oder piezoelektrisch angetrieben sein können. Vorzugsweise ist der Hohlraum des Katalysators in den Gasweg mit einbezogen, wozu die Katalysatorwand für den Gaseintritt bedarfsweise eine Ausnehmung aufweist.

Die Ramanzelle kann auch einen elektrischen oder magnetischen Abscheider für geladene Teilchen enthalten. Mit einem solchen Abscheider werden dem ramanaktiven Medium in wirkungsvoller Weise Verunreinigungen entzogen. Der Abscheider kann zugleich eine die Gasbewegung bewirkende oder unterstützende und/oder strömungsleitende Funktion haben.

Vor den inneren optischen Flächen der Ramanzellen, insbesondere vor dem Eintrittsfenster und/oder Austrittsfenster, kann in oder nahe der optischen Achse ein die optischen Flächen gegen Verschmutzung schützender Tubus, eine Blende o.ä. angeordnet sein. Der Tubus wirkt als Staurohr, das eine Gasströmung hin zu den optischen Flächen verhindert, so daß einer Abscheidung von Verunreinigungen entgegengewirkt wird. Das gilt es auch bei der Erzeugung einer Gasströmung in der Ramanzelle zu berücksichtigen.

Der Tubus, die Blende o.ä. können zugleich als Abscheider und/oder Festkörperkatalysator ausgebildet sein. Man vereinigt so in vorteilhafter Weise mehrere Funktionen in einem Bauteil.

Die erfindungsgemäße Ramanzelle ist für Anwendungen im Laserresonator und außerhalb des Laserresonators gleichermaßen geeignet. Letztere Anordnung ist für die Erzeugung bestimmter Pulsformen bevorzugt. Die Ramanzelle kommt bevorzugt zum Einsatz, um die Laserstrahlung eines Nd-YAG-Lasers von der Wellenlänge 1,06 µ den Wellenlängenbereich um 1,54 µ zu verschieben. Die Augenempfindlichkeit des Menschen ist hier um Zehnerpotenzen geringer und die Gefährdung durch Streulicht entsprechend herabgesetzt. Das ermöglicht den Einsatz eines Laser-Entfernungsmessers mit hoher Pulsleistung nach dem Puls-Echo-Prinzip in der Nähe von Menschen.

Im folgenden wird die Erfindung anhand einiger Ausführungsbeispiele näher erläutert, wobei die in den einzelnen Figuren einander entsprechenden Teile dieselben Bezugszahlen aufweisen. Es zeigt
- Fig. 1: eine Schemaskizze der Vorrichtung samt Mitteln zum Gastransport und/oder zur Gasverwirbelung und zur Reduzierung der Gasbelegung auf den Fenstern der Ramanzelle;
- Fig. 2-4: Vorrichtungen gemäß Fig. 1 mit Variationen in der Anordnung des Katalysators und der Ausbildung der gastransportierenden und/oder gasverwirbelnden Mittel.

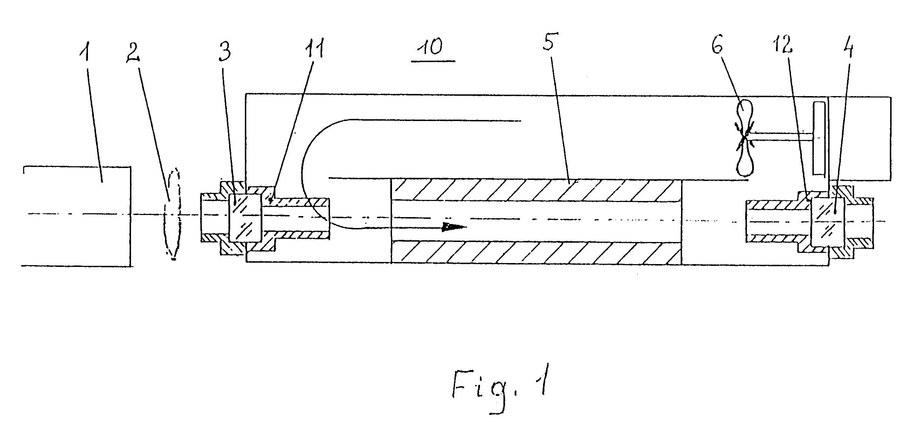

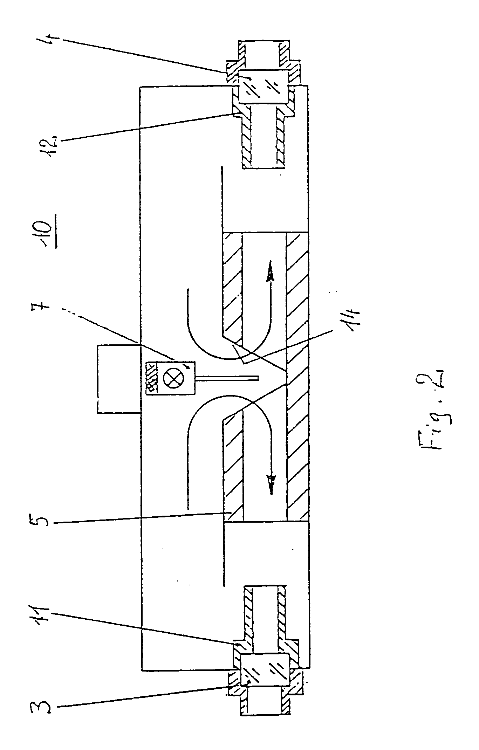

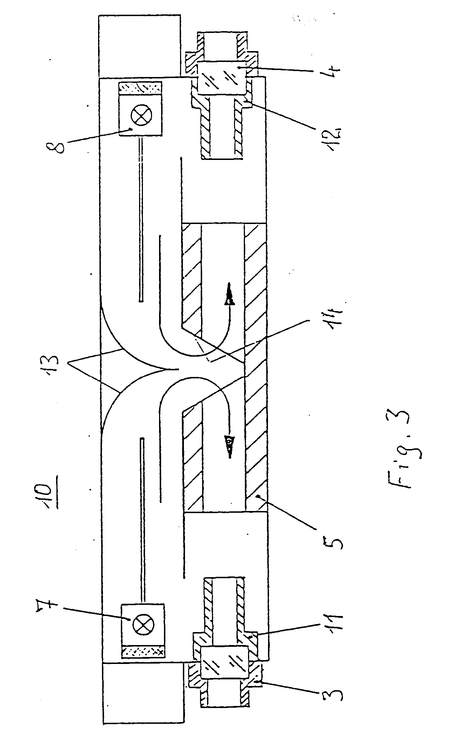

Bei der erfindungsgemäßen Vorrichtung nach Fig. 1 ist mit der Bezugszahl 1 der Pumplaser angedeutet, dessen Laserstrahl mittels der Linse 2 gebündelt wird und durch das Eintrittsfenster 3 in die Ramanzelle einfällt, um nach Durchlaufen der Zelle sie über das dem Eintrittsfenster gegenüberliegend angeordnete Austrittsfenster 4 wieder zu verlassen. Die Fenster können verspiegelt sein. Die Ramanzelle ist außerhalb des Laserresonators gezeigt, kann sich aber auch innerhalb des Laserresonators befinden.

Das in der Ramanzalle enthaltene ramanaktive Medium ist bei dem vorliegenden Ausführungsbeispiel Methan. Bei anderen Ausführungsbeispielen der Erfindung sind aber auch Deuterium, Wasserstoff u.a. Medien vorstellbar, ohne daß dadurch der Rahmen der Erfindung verlassen würde. Mit der Methan-Raman-Zelle ist es z.B. möglich, die Wellenlänge λ ≈ 1,06 µ eines Nd-YAG- Lasers in den augenunschädlichen Bereich von z.B. λ ≈ 1,54 µ zu verschieben. Hierzu sind hohe Moleküldichten bzw. hohe Drucke von ca. 100 Bar sowie hohe Leistungsdichten des Pumplasers 1 erforderlich, wenn man einen vergleichsweise hohen Wirkungsgrad anstrebt.

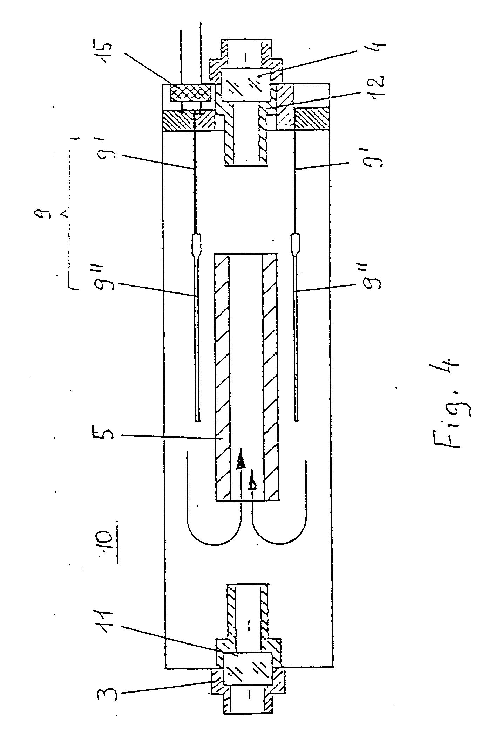

Um nun bei derartigen Vorrichtungen speziell mit Ramanzellen in Sealed-off-Bauweise die Zerstörung des ramanaktiven Gases und empfindlicher Komponenten wie Optiken zu vermeiden, wird gemäß der Erfindung vorgeschlagen, in die Ramanzelle eine adsorbierend und katalytisch wirkende Substanz zu integrieren. Diese kann aus einem Trägermaterial von z.B. Al-Oxid-Keramik mit γ - oder η -Struktur und Metall- und Edelmetallmischungen als katalytisch wirksamer Substanz bestehen, die mit einem beigemischten Gas oder Gasgemisch kombiniert ist. In ersterem Fall liegt eine heterogene, und in letzterem eine homogene Katalyse vor, die vor allem die unerwünschte Kohlenwasserstoffbildung erheblich reduziert. Besitzt der Katalysator feste Konsistenz, z.B. die Form eines Hohlzylinders 5 mit rundem oder eckigem Querschnitt, so kann er mit H₂, einer Metall- und auch einer Edelmetallmischung belegt werden, wodurch eine besonders gute Aktivität erzielt wird. Die Belegung mit H₂ erfolgt in herkömmlicher Weise unter Druck- und Temperatureinwirkung. Ein solch kompakter Katalysator kann - wie hier oder auch in den Fig. 2 und 3 - im Bereich der Zellenwand angeordnet sein. Er läßt sich aber auch, wie dies aus Fig. 4 ersichtlich ist, zentrisch anordnen. Gemäß einem weiteren, zeichnerisch nicht dargestellten Ausführungsbeispiel ist es auch denkbar, daß die innere Zellenoberfläche katalytische Materialien trägt, so daß man sich sogar einen u. U. den Gasfluß beeinträchtigenden gesonderten Körper innerhalb der Ramanzelle erspart.

Die Achse des Hohlzylinders 5 fällt mit der optischen Achse der Ramanzelle zusammen. Der Fokus des Lasers 1 liegt auf dieser Achse im Innern des Hohlzylinders 5, und zwar außermittig von dem Eintrittsfenster 3 weg zu dem Austrittsfenster 4 hin versetzt. Diese Anordnung trägt dazu bei, im Laserfokus gebildete Verunreinigungen von dem durch höhere Strahlungsintensitäten belasteten Eintrittsfenster 3 fernzuhalten.

Bei nicht staubfreiem bzw. mit Ionen oder niederionisierenden Beimischungen versetztem Gas besteht die Gefahr eines Gasdurchbruchs oder einer Plasmabildung, insbesondere wenn eine hohe Energiedichte im Fokusbereich der Ramanzelle gegeben ist. Um dem entgegenzuwirken, sind in der Zelle Mittel für einen Gastransport und/oder eine Gasverwirbelung vorgesehen, die im anstehenden Ausführungsbeispiel aus dem magnetisch gekoppelten propellerartigen Flügelrad 6 eines Axialgebläses bestehen, das axial neben dem Katalysator angeordnet ist und eine Zirkulationsströmung an dem Katalysator 5 vorbei und durch seine Zylinderöffnung hindurch bewirkt. Andere Bauformen eines Gebläserotors sind ebenfalls möglich, z.B. das Laufrad eines Radialgebläses. Der halbkreisförmige Pfeil deutet die Gasströmung an; er zeigt auch, daß der Katalysator 5 über seinen Hohlraum in den Gasweg mit einbezogen ist. Die demgegenüber strichpunktiert eingezeichnete Achse zeigt den Verlauf der Laserstrahlung.

Gasanteile, die nicht direkt zum Katalysator gelangen können, oder unvollständig gereinigt sind, stellen eine Gefahr für die empfindlichen Fenster 3 und 4 der Ramanzelle dar. Innerhalb der Ramanzelle 10 kann diesen deshalb, was allerdings nicht obligatorisch ist, ein Tubus (Staurohr) 11 bzw. 12 aufgesetzt werden. Derselbe besteht aus Metall und bewirkt vor den empfindlichen Fensteroberflächen einen Gasstau, der die direkte Belastung der optischen Flächen reduziert. Zwischen den Tuben 11, 12 und dem Katalysator 5 verbleibt in Axialrichtung ein Abstand, der einen Durchtritt der Gasströmung ermöglicht, die hier ihre Umlenkung erfährt. Sofern solche Tuben zur Anwendung gelangen, können sie ersatzweise oder noch zusätzlich zu dem vorhandenen Katalysator 5 gleichfalls als Katalysator und/oder als ein die geladenen Teilchen durch sein elektrisches Feld einfangender Kondensator ausgebildet sein. Ebenso ist eine magnetische Ablenkung bzw. ein magnetischer Einfang geladener Teilchen möglich. Dies ist für kompakte und leistungsstarke Systeme mit hohen Energien und schnellen Pulsfolgen wünschenswert.

Das Ausführungsbeispiel der Fig. 2 zeigt eine Variante hinsichtlich der den Gastransport bewirkenden Mittel. Das Flügelrad 6 der Fig. 1 ist hier durch ein magnetisch gekoppeltes Schwingflügelsystem 7 ersetzt. Dieses greift mit einer im wesentlichen radial orientierten Schwinglamelle in eine Wandausnehmung 14, die etwa in der Mitte des rohrförmigen Katalysators 5 vorgesehen ist, und wirbelt den Gasstrom in zwei gegenläufigen Teilströmen mit den durch die beiden halbrunden Pfeile angedeuteten Bahnen.

Fig. 3 unterscheidet sich von Fig. 2 im wesentlichen nur durch die Verdoppelung des Schwingflügelsystems. Die beiden Schwingflügel 7 und 8 sind hier mit im wesentlichen axialer Orientierung jeweils an einer Stirnwand der Ramanzelle 10 und neben dem Katalysator 5 angeordnet, wobei sie nicht ganz an dessen Wandausnehmung 14 reichen. Zwischen den Schwingflügeln 7, 8 ist ein Leitblech 13 an einer der Wandöffnung 14 des Katalysators 5 gegenüberliegenden Stelle der Zelleninnenwand so befestigt, daß es den Gasstrom wieder in zwei gegenläufigen Teilströmen mit den durch die beiden halbrunden Pfeile angedeuteten Bahnen lenkt.

In dem Ausführungsbeispiel der Fig. 4 schließlich sind den Gastransport und eine Gasverwirbelung bewirkende Mittel in Form von zwei - oder auch vier - Piezoschwingern 9 vorgesehen, die in einander diametral gegenüberliegender Anordnung mit axialer Erstreckung beidseits des mittig in der Ramanzelle 10 aufgenommenen Katalysators 5 an der strahlaustrittsseitigen Stirnwand der Ramanzelle 10 befestigt sind und über die druckdichte elektrische Durchführung 15 gespeist werden. Ein solcher Schwinger setzt sich zusammen aus der Piezokeramik 9′, die einends in die besagte Stirnwand eingelassen ist, und der Kunststoffolie 9˝, die mit dem freien Ende der Piezokeramik verbunden ist. Wenn der Piezoschwinger eingeschaltet ist, ergibt sich der durch die beiden Richtungspfeile angedeutete Gasumlauf außen an dem Katalysator 5 vorbei und durch seine Öffnung hindurch zurück.

## Patentansprüche

1. Laservorrichtung mit Ramanzelle zur Umwandlung von Laserstrahlung einer Wellenlänge in Strahlung anderer Wellenlänge mit wenigstens einem ramanaktiven Medium, das mit wenigstens einer katalytisch wirkenden Substanz in Kontakt ist und sich in einer mit Ein- und Austrittsfenster versehenen Kammer befindet, **dadurch gekennzeichnet,** daß
a) die katalytisch wirkende Substanz ein adsorbierender Festkörperkatalysator (5) ist, der einen Katalysatorträger aus γ-Aluminiumoxid, η-Aluminiumoxid oder einer Mischstruktur der beiden Oxide beinhaltet,
b) die katalytisch wirkende Substanz die Edelmetalle Platin und - in wenigen Gewichtsprozenten - Palladium enthält,
c) die katalytisch wirkende Substanz im Bereich weniger Gewichtsprozente metallische Beimischungen von Antimon, Mangan oder Zinn einzeln oder in Kombination enthält und
d) sich die Katalytisch wirkende Substanz in einem von dem Phasenzustand des ramanaktiven Mediums verschiedenen Phasenzustand befindet, was eine heterogene Katalyse ermöglicht, und
e) die vorstehende heterogene Katalyse mit einer homogenen kombiniert ist, wobei vorzugsweise der Festkörperkatalysator mit dem homogenen Katalysator wenigstens teilweise gesättigt ist.

2. Laservorrichtung nach Anspruch 1, **dadurch gekennzeichnet,** daß der Festkörperkatalysator (5) einen Katalysatorträger aus einer Kombination von Metall und Metalloxid im Schichtverbund, z.B. in Form einer Washcoats,hat.

3. Laservorrichtung nach einem der Ansprüche 1 oder 2, **dadurch gekennzeichnet,** daß der Katalysatorträger Beimischungen von Kohlenstoff (C) und/oder Natrium (Na) und/oder Eisen (Fe) und/oder Silizium (Si) und/oder Rubidium (Rb) und/oder Kalium (K) und/oder Zinn (Sn) enthält.

4. Laservorrichtung nach einem der Ansprüche 1 bis 3, **dadurch gekennzeichnet,** daß der Festkörperkatalysator (5) ein die optische Achse umschließender, vorzugsweise zylindrischer Hohlkörper mit rundem oder eckigem Querschnitt ist.

5. Laservorrichtung nach einem der Ansprüche 1 bis 4, **dadurch gekennzeichnet,** daß der Fokus der Laserstrahlung im Innern des Festkörperkatalysators (5) liegt, und zwar vorzugsweise vom Eintrittsfenster (3) weg zum Austrittsfenster (4) hin versetzt.

6. Laservorrichtung nach einem der Ansprüche 1 bis 5, **dadurch gekennzeichnet,** daß die Innenwand der Ramanzelle (10) wenigstens abschnittsweise als Katalysator ausgebildet ist.

7. Laservorrichtung nach einem der Ansprüche 1 bis 6, **dadurch gekennzeichnet,** daß in der Ramanzelle (10) eine Einrichtung zur Erzeugung einer Gasbewegung, insbesondere Gasverwirbelung und/oder Gastransportströmung, vorzugsweise Zirkulationsströmung, enthalten ist.

8. Laservorrichtung nach Anspruch 7, **dadurch gekennzeichnet,** daß die Einrichtung aus mindestens einem Gebläserotor (6) oder mindestens einem Schwingflügelsystem (7, 8, 9) besteht, die mit magnetischer Kopplung oder piezoelektrisch angetrieben sein können.

9. Laservorrichtung nach einem der Ansprüche 7 oder 8, **dadurch gekennzeichnet,** daß in der Ramanzelle (10) ein elektrischer oder magnetischer Abscheider für geladene Teilchen enthalten ist, der zugleich eine die Gasbewegung bewirkende oder unterstützende und/oder strömungsleitende Funktion haben kann.

10. Laservorrichtung nach einem der Ansprüche 7 bis 9 soweit auf Anspruch 5 rückbezogen, **dadurch gekennzeichnet,** daß der Hohlraum des Katalysators (5) in den Gasweg mit einbezogen ist und die Katalysatorwand für den Gaseintritt bedarfsweise eine Ausnehmung (14) aufweist.

11. Laservorrichtung nach einem der Ansprüche 1 bis 10, **dadurch gekennzeichnet,** daß vor den inneren optischen Flächen der Ramanzelle (10), insbesondere vor dem Eintrittsfenster (3) und/oder Austrittsfenster (4), in oder nahe der optischen Achse ein die optischen Flächen gegen Verschmutzung schützender Tubus (11), eine Blende o.ä. angeordnet ist.

12. Laservorrichtung nach einem der Ansprüche 1 bis 11, **dadurch gekennzeichnet,** daß der Tubus (11), die Blende o.ä. zugleich als Abscheider und/oder Festkörperkatalysator (5) ausgebildet ist.

13. Laservorrichtung nach einem der Ansprüche 1 bis 12, **dadurch gekennzeichnet,** daß die Ramanzelle (10) derart abgeschlossen ist, daß ihr Öffnen einer Zerstörung gleichkommt.

## Claims

1. Laser appliance comprising Raman cell for converting laser radiation of one wavelength into radiation of a different wavelength, comprising at least one Raman-active medium which is in contact with at least one catalytically active substance and is held in a chamber provided with an entrance window and an exit window, characterized in that
a) the catalytically active substance is an adsorbing solid-state catalyst (5) which comprises a catalyst support made of γ-aluminium oxide, η-aluminium oxide or a mixed structure of the two oxides,
b) the catalytically active substance contains the noble metals platinum and - in a few per cent by weight - palladium,
c) the catalytically active substance contains, in the range of a few per cent by weight, metallic admixtures of antimony, manganese or tin, individually or in combination and
d) the catalytically active substance is in a phase state which differs from the phase state of the Raman-active medium, which enables heterogeneous catalysis, and
e) the abovementioned heterogeneous catalysis is combined with a homogeneous one, the solid-state catalyst being preferably at least partially saturated with the homogeneous catalyst.

2. Laser appliance according to Claim 1, characterized in that the solid-state catalyst (5) has a catalyst support made of a combination of metal and metal oxide in a layer composite structure, e.g. in the form of a wash coat.

3. Laser appliance according to either Claim 1 or 2, characterized in that the catalyst support contains admixtures of carbon (C) and/or sodium (Na) and/or iron (Fe) and/or silicon (Si) and/or rubidium (Rb) and/or potassium (K) and/or tin (Sn).

4. Laser appliance according to any one of Claims 1 to 3, characterized in that the solid-state catalyst (5) is a preferably cylindrical hollow body which encircles the optical axis and has a round or angular cross-section.

5. Laser appliance according to any one of Claims 1 to 4, characterized in that the focus of the laser radiation is situated in the interior of the solid-state catalyst (5), preferably, to be precise, offset away from the entrance window (3) towards the exit window (4).

6. Laser appliance according to any one of Claims 1 to 5, characterized in that the inner wall of the Raman cell (10) is designed as a catalyst, at least sectionally.

7. Laser appliance according to any one of Claims 1 to 6, characterized in that the Raman cell (10) contains a device for generating a motion in a gas, in particular swirling of gas and/or gas transfer flow, preferably circulatory flow.

8. Laser appliance according to Claim 7, characterized in that the device comprises at least one blower rotor (6) or at least one oscillating-vane system (7, 8, 9), which can be driven by a magnetic coupling or piezoelectrically.

9. Laser appliance according to either Claim 7 or 8, characterized in that the Raman cell (10) contains an electric or magnetic separator for charged particles, which separator may at the same time have a function of causing or supporting the motion of the gas and/or a flow-guiding function.

10. Laser appliance according to any one of Claims 7 to 9, as far as they refer to Claim 5, characterized in that the cavity of the catalyst (5) is incorporated in the gas path, and the catalyst wall has a cut-out (14), where required, for the inflow of the gas.

11. Laser appliance according to any one of Claims 1 to 10, characterized in that there is positioned, in front of the inner optical surfaces of the Raman cell (10), in particular in front of the entrance window (3) and/or exit window (4), in or near the optical axis, a tube (11) which protects the optical surfaces against contamination, a restrictor or the like.

12. Laser appliance according to any one of Claims 1 to 11, characterized in that the tube (11), the restrictor or the like is designed, at the same time, as a separator and/or solid-state catalyst (5).

13. Laser appliance according to any one of Claims 1 to 12, characterized in that the Raman cell (10) is sealed off in such a way that opening it is equivalent to destroying it.

## Revendications

1. Dispositif laser à cellule à effet Raman pour la conversion de rayonnement laser d'une longueur d'onde en rayonnement d'une autre longueur d'onde, avec au moins un milieu à activité Raman qui est en contact avec au moins une substance à activité catalytique et se trouve dans une chambre munie d'une fenêtre d'entrée et d'une fenêtre de sortie, caractérisé par le fait que
a) la substance à activité catalytique est un catalyseur solide adsorbant (5) qui comprend un support de catalyseur en alumine , alumine ou une structure mixte des deux oxydes,
b) la substance à activité catalytique contient les métaux précieux platine et palladium, ce dernier à raison de quelques pour-cent en poids,
c) la substance à activité catalytique contient, à raison de quelques pour-cent en poids, des additions des métaux antimoine, manganèse ou étain, pris séparément ou en combinaison,
d) la substance à activité catalytique se trouve dans un état de phase différent de l'état de phase du milieu à activité Raman, ce qui permet une catalyse hétérogène, et
e) la catalyse hétérogène précitée est combinée avec une catalyse homogène, le catalyseur solide étant de préférence partiellement saturé avec le catalyseur homogène.

2. Dispositif laser suivant la revendication 1, caractérisé par le fait que le catalyseur solide (5) comprend un support de catalyseur formé d'une combinaison de métal et d'oxyde métallique en structure multicouches, par exemple sous la forme d'un Washcoat.

3. Dispositif laser suivant l'une des revendications 1 ou 2, caractérisé par le fait que le support de catalyseur contient des additions de carbone (C) et/ou sodium (Na) et/ou fer (Fe) et/ou silicium (Si) et/ou rubidium (Rb) et/ou potassium (K) et/ou étain (Sn).

4. Dispositif laser suivant l'une des revendications 1 à 3, caractérisé par le fait que le catalyseur solide (5) est un corps creux de préférence cylindrique, de section circulaire ou polygonale, entourant l'axe optique.

5. Dispositif laser suivant l'une des revendications 1 à 4, caractérisé par le fait que le foyer du rayonnement laser se trouve à l'intérieur du catalyseur solide (5), à savoir de préférence décalé par rapport à la fenêtre d'entrée (3) en direction de la fenêtre de sortie (4).

6. Dispositif laser suivant l'une des revendications 1 à 5, caractérisé par le fait que la paroi intérieure de la cellule à effet Raman (10) est réalisée en partie au moins comme catalyseur.

7. Dispositif laser suivant l'une des revendications 1 à 6, caractérisé par le fait que la cellule à effet Raman (10) contient un dispositif pour produire un mouvement de gaz, en particulier une turbulence de gaz et/ou un écoulement de transport de gaz, de préférence une circulation.

8. Dispositif laser suivant la revendication 7, caractérisé par le fait que le dispositif se compose d'au moins un rotor de soufflante (6) ou d'au moins un système de pale oscillante (7, 8, 9), pouvant être entraîné par couplage magnétique ou par voie piézo-électrique.

9. Dispositif laser suivant l'une des revendications 7 ou 8, caractérisé par le fait que la cellule à effet Raman (10) contient un séparateur électrique ou magnétique pour des particules chargées, qui peut en même temps avoir une fonction produisant ou renforçant et/ou guidant le mouvement de gaz.

10. Dispositif laser suivant l'une des revendications 7 à 9, dans la mesure où elle est rattachée à la revendication 5, caractérisé par le fait que la cavité du catalyseur (5) est incorporée au trajet de gaz et que la paroi du catalyseur présente en cas de besoin un évidement (14) pour l'entrée de gaz.

11. Dispositif laser suivant l'une des revendications 1 à 10, caractérisé par le fait qu'un tube (11), un diaphragme ou analogue protégeant les surfaces optiques contre l'encrassement est disposé devant les surfaces internes optiques de la cellule à effet Raman (10), en particulier devant la fenêtre d'entrée (3) et/ou la fenêtre de sortie (4), dans ou à proximité de l'axe optique.

12. Dispositif laser suivant l'une des revendications 1 à 11, caractérisé par le fait que le tube (11), diaphragme ou analogue est réalisé simultanément en tant que séparateur et/ou catalyseur solide (5).

13. Dispositif laser suivant l'une des revendications 1 à 12, caractérisé par le fait que la cellule à effet Raman (10) est fermée de telle manière que son ouverture équivaut à une destruction.
